# FASCICULE DE BREVET EUROPEEN

(11) **EP 0 785 303 B1**
(45) Date de publication et mention de la délivrance du brevet: **09.05.2001**
(21) Numéro de dépôt: 97420009.9
(22) Date de dépôt: 16.01.1997
(51) Int. Cl.: D06F 75/18, D06F 75/12, C02F 5/02

(54) **Appareil électroménager à vapeur comportant un dispositif anti-tartre**
Elektrisches Dampfhaushaltgerät mit einer Antikesselsteinvorrichtung
Electric steam household apparatus with an antiscaling device

(30) Priorité: 19.01.1996 FR 9600822
(43) Date de publication de la demande: 23.07.1997
(73) Titulaire: SEB S.A., 69130 Ecully (FR)
(72) Inventeur: Debourg, Jean Pierre, 69008 Lyon (FR); Daulasim, Denis, 69100 Villeurbanne (FR); Ledion, Jean, 75013 Paris (FR)

(56) Documents cités:
- EP-A- 0 557 901
- EP-A- 0 558 402
- FR-A- 2 632 331
- FR-A- 2 648 163

## Description

La présente invention est relative à un appareil électroménager mettant en oeuvre de la vapeur, notamment un appareil à génération de vapeur sensiblement instantanée, sans volume d'eau bouillante, tel un fer à repasser, cet appareil comportant un dispositif anti-tartre de traitement de l'eau, qui, emmagasinée dans un réservoir, est prévue pour être dirigée dans une chambre de génération sensiblement instantanée de vapeur.

L'un des problèmes majeurs de ce type d'appareil est la possibilité d'utilisation de l'eau courante provenant d'un robinet quelconque sans risquer une détérioration de l'appareil par dépôt de matière minérale, notamment de dépôt de calcaire ou de tartre. Un tel dépôt sur les conduits ou passages de l'eau ou de la vapeur peut entraîner leur obstruction progressive, ainsi que celles des ouvertures de sortie de vapeur pratiquées dans la semelle d'un fer. De plus, le dépôt de tartre contre les parois de la chambre de vaporisation diminue les échanges thermiques.

Ce problème est préoccupant car une obligation d'emploi exclusif d'eau déminéralisée s'avère dans la pratique fastidieux pour un appareil électroménager. En effet, soit cette eau doit régulièrement être achetée dans le commerce à un prix relativement élevé ; soit on doit la réaliser au moment du remplissage du réservoir en forçant de l'eau courante au travers d'une cartouche renfermant une matière déminéralisante, cette cartouche ne laissant passer qu'un faible débit de par sa perte de charge. Lorsque la résine échangeuse d'ions contenue dans la cartouche n'est plus capable de retenir le calcium de l'eau, elle peut par exemple changer de couleur, ce qui indique à l'utilisateur qu'il doit à nouveau la remplacer.

A ce titre, on connaît des fers à repasser comportant un dispositif d'élimination ou d'altération du tartre contenu dans l'eau destinée à être vaporisée, ce dispositif dit "anti-tartre" évitant de devoir démonter l'appareil pour enlever mécaniquement ou chimiquement le tartre déposé, ce qui est coûteux et incommode.

Le document FR 2 648 163 de la demanderesse divulgue un fer à repasser comprenant une cartouche renfermant un produit déminéralisant, tel qu'une résine d'échange d'ions, et disposé entre la sortie de l'eau du réservoir de stockage et la chambre de vaporisation. Ainsi, l'utilisateur n'a plus à manipuler de cartouche encombrante lors du remplissage du réservoir. Toutefois, il convient toujours de surveiller soit la couleur de la résine interne, soit le temps d'utilisation pour penser à son remplacement ou sa régénération lorsque nécessaire, ce qui est malheureusement trop souvent oublié dans le quotidien.

Le document FR 2 632 331, également de la demanderesse, divulgue un fer à repasser comprenant des moyens pour introduire dans le réservoir d'eau, lors de chaque remplissage ou mise sous tension, une quantité prédéterminée d'un composé chimique, tel qu'un acide formique, empêchant la formation du tartre dans la chambre de vaporisation. D'autres produits peuvent précipiter le calcium sous forme de sel, ou modifier la forme du tartre pour le rendre non incrustant. Toutefois, il convient également de vérifier périodiquement si la cassette correspondante contient encore du composé chimique, ou si elle doit être remplacée. De plus, le dispositif mécanique de dosage est complexe donc coûteux.

En alternative, le produit peut être intégré dans le fer lors de sa fabrication, et ce en quantité suffisante pour la durée de vie escomptée et pour la majorité des types d'eau potentiellement rencontrée. Toutefois, le dosage ne peut alors être que imprécis, ce qui en limite son efficacité. Ceci conduit notamment à inclure du produit en excès en cas d'utilisation d'eau douce naturelle, ce qui n'est pas écologiquement souhaitable.

On connaît également le brevet EP0558402 dans lequel le tartre précipite sur un matelas en fibres chauffé, qui retient ce tartre. Par suite de cette rétention le matelas se charge en tartre et doit donc périodiquement être changé.

Le but de la présente invention est de remédier aux inconvénients précités en proposant un appareil électroménager à vapeur comprenant un dispositif anti-tartre efficace de telle sorte qu'il puisse être utilisé de façon optimale même avec une eau courante de qualité quelconque. De préférence, ce dispositif ne doit pratiquement plus requérir aucune attention ou manoeuvre particulière de l'utilisateur, ni lors du remplissage, ni lors de la manipulation de l'appareil. De préférence également, la durée d'efficacité du dispositif doit être supérieure à celle de la vie de l'appareil, notamment en n'impliquant aucune addition régulière de produit chimique. Enfin, la structure de ce dispositif et de ses éléments constitutifs doit être simple pour qu'il reste fiable dans le temps, facile à construire et à assembler, et ce pour en diminuer d'autant les coûts de réalisation.

Ces buts sont atteints grâce à l'utilisation d'un dispositif anti-tartre et d'une méthode de précipitation ayant les caractéristiques définies dans les revendications 1 et 15.

Après un examen minutieux du principe régissant la précipitation du tartre, on a découvert qu'un simple chauffage est en fait suffisant pour déclencher une germination du tartre. Des essais en ateliers ont de plus montré que les germes ainsi générés restent mobiles au sein de l'eau, puis cristallisent et restent sous forme pulvérulente lors de la vaporisation, ce qui facilite leur évacuation hors de l'appareil par entraînement de la vapeur.

Cette solution selon l'invention basée sur un phénomène physique indéfiniment répétitif, prenant le contre-pied de toutes les solutions connues antérieures appliquées aux appareils électroménagers et basées sur des phénomènes chimiques, permet de s'affranchir élégamment de la contrainte d'un apport régulier de produit.

Ainsi, dans le cas d'un fer à repasser à vapeur, plutôt que de laisser le tartre précipiter en se déposant et croître de manière incontrôlée dans la chambre de vaporisation au risque d'obstruer, voire de boucher, toutes les sorties de vapeur au niveau de la semelle, on devance l'apparition de ce phénomène de manière volontaire dans l'eau avant la vaporisation pour favoriser une précipitation non incrustante susceptible de s'évacuer naturellement lors de l'éjection ultérieure de la vapeur.

Avantageusement, les moyens de thermoprécipitation comprennent une zone de chauffage de l'eau, notamment un réservoir. Il est alors possible de maintenir l'eau dans cette région pendant un temps donné, afin que la germination se produise.

Avantageusement, l'eau contenue dans la zone ou dans le réservoir de chauffage est maintenue à une température au moins supérieure à 60°C, et de préférence à une température comprise entre 90°C et 100°C, c'est-à-dire une température aussi proche que possible de la température d'ébullition tout en lui restant de préférence inférieure.

Ce phénomène de germination volontaire devient nettement apparent dès 60°C. Toutefois, la plage préférentielle de température citée permet d'accélérer notablement la vitesse de la précipitation du tartre, tout en évitant les inconvénients de la tumultuosité d'une ébullition. De plus, les remous au sein de l'eau induits par cette température, et s'additionnant aux éventuels mouvements de l'appareil, favorisent un dégazage du dioxyde de carbone dissout, réduisant les risques de précipitations ultérieures dans la chambre de vaporisation.

Selon un premier mode de réalisation, le réservoir de chauffage du dispositif anti-tartre est le réservoir normalement prévu pour le stockage de l'eau, et dont la cuvette est complétée de moyens de chauffage et de régulation. La face supérieure du réservoir peut alors être structurée de manière à assurer une protection thermique et/ou garnie de matériau réfractaire.

Ce mode de réalisation s'avère assez simple à réaliser, et se prête bien à une production en masse à coût réduit, la quantité importante d'eau en présence permettant de développer la germination du tartre sur une période longue et d'atteindre ainsi un taux de précipitation utile.

Selon un second mode de réalisation, le réservoir du dispositif anti-tartre est un réservoir auxiliaire muni de moyens régulés de chauffage et, si désiré, structuré de manière à assurer une protection thermique et/ou garnie de matériau réfractaire. De préférence, le volume de ce réservoir auxiliaire est établi en fonction du débit maximum possible de vapeur de telle sorte que l'eau y soit maintenue à une température élevée pendant le temps nécessaire à au moins une partie de la germination ou pendant un temps correspondant sensiblement au temps de germination prévu. Selon les conditions applicables ce temps est évidemment variable, mais certains essais réalisés sans catalyseur ou sans additif ont permis d'obtenir des germinations au moins partielles en moins de trois minutes. De préférence également, ce réservoir auxiliaire est installé entre le réservoir principal d'eau froide et la chambre de vaporisation.

L'emploi d'un réservoir auxiliaire permet d'optimiser à une valeur juste suffisante l'apport de calories nécessaire au développement d'un taux utile de précipitation volontaire selon l'invention. Sa localisation entre le réservoir principal et la chambre de vaporisation fait que le processus n'est effectué que peu de temps avant la vaporisation, minimisant ainsi le risque d'une redissolution du tartre dans une eau refroidie, même si ce risque est limité, le CO₂ ayant dégazé.

Dans le cas d'un fer à repasser à réservoir séparé relié par un câble d'alimentation électrique et un tube d'alimentation d'eau à une station fixe comportant un réservoir principal d'eau et une pompe de refoulement de l'eau dans le tube d'alimentation, le réservoir auxiliaire du dispositif anti-tartre est installé dans la station fixe entre le réservoir principal et la pompe, le transfert de l'eau du réservoir principal dans le réservoir auxiliaire s'effectuant par un conduit inférieur selon le principe des vases communicants. Le réservoir auxiliaire anti-tartre ainsi localisé dans la station fixe ne présente alors pratiquement aucun risque de danger pour l'utilisateur quand bien même il est porté à une température élevée.

Dans le cas d'un fer à repasser à réservoir intégré comprenant un réservoir principal d'eau s'étendant sensiblement horizontalement au-dessus de la chambre de vaporisation, le réservoir auxiliaire est situé à proximité du réservoir d'eau avec lequel il est en communication par un passage, un canal débouchant dans la partie inférieure du réservoir auxiliaire amenant l'eau vers la chambre de vaporisation . De préférence, par simple commodité d'implantation, le réservoir auxiliaire est situé à l'extrémité arrière du réservoir d'eau avec lequel il est en communication par un passage. Lorsque le réservoir auxiliaire est en communication avec le réservoir principal par un orifice ménagé dans sa face supérieure, le réservoir principal comporte alors un plan incliné adjacent au réservoir auxiliaire, ce plan partant du fond et s'arrêtant légèrement au-dessus de la face supérieure du réservoir auxiliaire ; le bord supérieur de ce plan, la face supérieure du réservoir auxiliaire et la paroi supérieure du réservoir principal définissant un passage de l'eau du réservoir principal dans le réservoir auxiliaire.

Cet agencement compact est particulièrement approprié pour un fer à repasser à réservoir intégré, le réservoir auxiliaire chaud se retrouvant loin dans la partie inférieure arrière du fer, le réservoir principal constituant une zone de protection entre la poignée du fer et ce réservoir auxiliaire.

Les moyens de chauffage peuvent être un module de chauffage individuel à résistances électriques régulé de manière connue par exemple par un dispositif de bilame, ou plus simplement, dans le cas d'un fer à repasser à réservoir intégré, un pont thermique ménagé entre la fonderie de la chambre d'évaporation et la paroi du réservoir auxiliaire, les dimensions de ce pont assurant un transfert prédéterminé de calories juste suffisant pour maintenir ce réservoir auxiliaire à la température désirée, et ce à partir de la source thermique régulée que constitue cette fonderie. Ces modes de chauffage ne posent pas de problèmes techniques particuliers, limitant d'autant les coûts de réalisation.

Il est à noter que, pour faire de la vapeur, il faut porter l'eau liquide de la température ambiante à la température d'ébullition, puis fournir l'énergie nécessaire au changement de phase. Or, dans les modes de réalisation décrits précédemment, l'apport thermique global dans l'appareil reste sensiblement identique à celui des appareils existants dès lors que le réservoir de chauffage est correctement isolé thermiquement, les calories fournies pour la précipitation volontaire n'étant plus à apporter lors de l'ébullition puis de la vaporisation.

De plus, si le dispositif anti-tartre selon l'invention est inopérant pour une eau douce voire déminéralisée, il n'entraîne pas pour autant d'effet néfaste secondaire. On peut donc utiliser un même appareil électroménager pour toutes les eaux susceptibles d'êtres consommées.

Utilement, on peut installer dans le réservoir de chauffage un moyen permettant d'activer la germination du tartre, tel que des fragments de roches naturelles ou artificielles. Ces fragments peuvent être contenus dans une enveloppe poreuse éventuellement amovible, ou présenter une section supérieure à celle du conduit de sortie. Ces fragments agissent à la façon d'un catalyseur en définissant des sites d'activation de germination, ce qui diminue le temps minimum nécessaire du séjour de l'eau dans ce réservoir. Leur agitation provoquée par les mouvements du fer favorise de plus le dégazage.

Avantageusement, on peut tapisser ou traiter les parois internes des réservoirs de chauffage par un produit ou un composé empêchant l'incrustation locale du tartre, tel qu'un revêtement en couche mince d'acier inoxydable.

La présente invention concerne également une méthode de précipitation du tartre pour appareil électroménager comportant des moyens de génération de vapeur sensiblement instantanée, caractérisée en ce qu'une quantité d'eau prédéterminée est préchauffée avant sa vaporisation. La température de préchauffage est avantageusement supérieure à 60° C et de préférence comprise entre 90° C et 100° C.

L'invention sera mieux comprise à l'étude de modes de réalisation pris à titres nullement limitatifs et illustrés dans les figures annexées dans lesquelles :
- la figure 1 est une vue schématique d'un fer à repasser à réservoir séparé comprenant un dispositif anti-tartre selon l'invention,
- la figure 2 est une vue en coupe schématique longitudinale d'une première variante d'un fer à repasser à réservoir intégré comprenant un dispositif anti-tartre selon l'invention, et
- la figure 3, est une vue selon la figure 2 d'une seconde variante d'un fer à repasser à réservoir intégré.

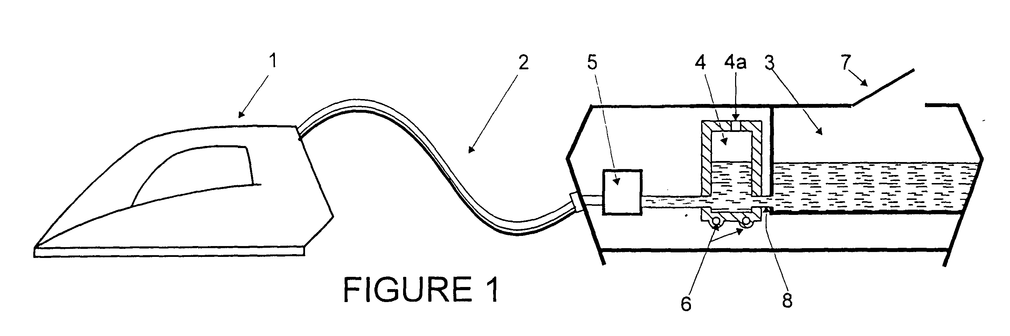

Sur la figure 1 est illustré un fer à repasser à réservoir indépendant comportant une station fixe incorporant un réservoir d'eau principal 3 avec une ouverture d'entrée 7 fermée par une porte, et associé à une pompe 5 ; ainsi qu'un fer à repasser mobile 1 relié à la station par un tuyau d'alimentation en eau 2 contigu à un fil d'alimentation électrique. Le fer à repasser comprend un dispositif interne de vaporisation de l'eau qui est ensuite propulsée hors d'une pluralité d'orifices ménagée dans la semelle inférieure en contact avec le tissu.

Selon l'invention, on intercale un réservoir auxiliaire 4 sur le conduit 8 reliant le réservoir principal 3 à la pompe 5. Ce réservoir auxiliaire se situe sensiblement au même niveau que le réservoir principal, et présente un évent 4a en sa paroi supérieure, faisant qu'il est naturellement alimenté selon le principe des vases communicants. Ce réservoir auxiliaire est muni d'un élément électrique chauffant 6 et d'une régulation permettant de porter son eau au voisinage de 95°C. Si désiré, un enrobage thermique non illustré permet de minimiser la chaleur nécessaire, notamment en évitant tout risque d'échauffement de l'eau du réservoir 3.

Le mode de fonctionnement est le suivant. L'utilisateur remplit le réservoir 3 par l'ouverture 7. L'eau s'écoule dans le réservoir auxiliaire 4 par gravité au travers du conduit 8. Le réservoir auxiliaire est chauffé par l'élément résistif 6 de sorte que l'eau contenue s'échauffe également. Cet échauffement provoque une germination et formation de minuscules grains de tartre.

Lorsque l'utilisateur commande une arrivée de vapeur, la pompe 5 se met en route, aspire l'eau du réservoir auxiliaire 4 avec ses particules de tartre, et les refoule dans le tuyau 2. L'eau est ensuite vaporisée instantanément à l'intérieur de la chambre de vaporisation du fer 1. On constate alors de manière surprenante que le tartre préalablement précipité n'adhère pas à l'intérieur de la chambre et est entraîné par la vapeur au fur et à mesure de sa production, ce qui ne gêne en rien le repassage.

L'évent 4a laisse s'échapper le dioxyde de carbone, favorisant ainsi le dégazage de l'eau du réservoir 4, afin de favoriser la germination et d'éviter une redissolution du tartre dans une éventuelle eau refroidie.

Dans le détail, des ions calcium Ca²⁺ sont largement représentés dans la plupart des eaux. Les ions carbonate CO₃²⁻ sont directement liés à la réaction d'ions hydroxyde OH⁻ sur des ions hydrogénocarbonate HCO₃⁻ provenant de gaz carbonique CO₂ atmosphérique dissous dans l'eau. L'équilibre du produit ionique des ions calcium et ions carbonate dépend d'un coefficient Ks variable avec la température. Par exemple, ce coefficient Ks est égal à 1,22 X 10^{-8.} à 0°C ; à 0,81 X 10⁻⁸ à 25°C. Le coefficient Ks diminuant avec l'augmentation de température, il en résulte que le chauffage de l'eau augmente le domaine où les carbonates deviennent insolubles.

Des paires d'ions hydratés de calcium et de carbonate vont alors se grouper pour former une amorce de germination autour de laquelle des couches ioniques vont apparaître pour former un germe colloïdal chargé positivement et mobile dans l'eau. De très fines particules de tartre germent, grossissent puis sont entraînées avec l'eau jusqu'à la surface de vaporisation. Dans ces conditions, on constate que l'eau se vaporisant instantanément sur la surface chaude de la chambre de vaporisation dépose son tartre sous forme de grains très fins non adhérents à la surface, et que la taille de ces grains n'augmente pas, permettant l'évacuation de ceux-ci lors de la vaporisation.

Par ailleurs, on a également constaté lors de nombreux essais en atelier que la densité du flux de calorie apporté par les résistances chauffantes surmoulées dans le corps du réservoir auxiliaire a une incidence sur la cinétique et le seuil de précipitation du tartre. Une plus forte densité de flux permet en fait d'avoir une sursaturation de carbonate très importante au voisinage de la résistance.

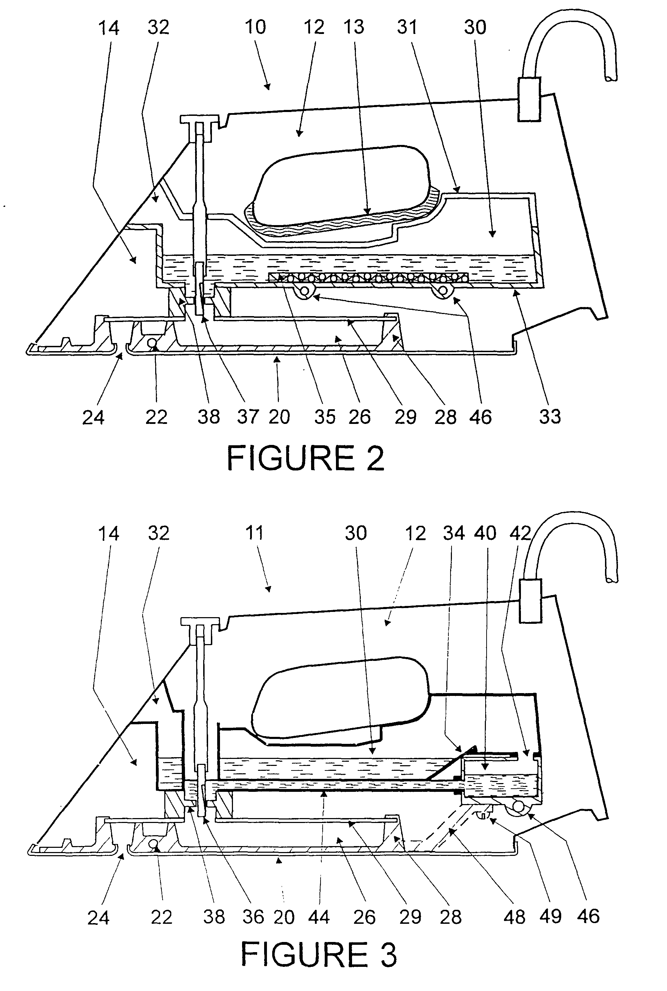

Les figures 2 et 3 illustrent des fers à repasser à réservoir intégré 10 et 11 dans lesquels on reconnaît une carrosserie externe 14 à laquelle est rattachée une pièce de fonderie inférieure 28 qui, avec son couvercle supérieur 29, forme une chambre de vaporisation 26. Contre la face inférieure de cette fonderie est rapportée une semelle de repassage 20 en acier inoxydable, en aluminium avec ou sans revêtement en émail, cette semelle étant fixée par exemple par sertissage tout le long de sa périphérie et/ou au niveau d'ouvertures 24 de sortie de vapeur en communication avec la chambre 26. Cette fonderie est chauffée par un réseau de résistances chauffantes 22 usuellement surmoulées.

Un réservoir principal d'eau 30 sensiblement horizontal est disposé à l'intérieur du corps 14, peu en dessous d'une poignée centrale 12 supérieure. Ce réservoir comprend une entrée frontale 32 pour l'introduction de l'eau, cette entrée étant fermée par une chicane ou un clapet mobile. Comme mieux visible sur la figure 2, ce réservoir principal 30 est usuellement en communication directe avec la chambre de vaporisation 26 par le biais d'un dispositif dit "goutte à goutte" de type connu. Ce dispositif comprend normalement un boisseau 36 situé au milieu d'un joint souple 38 d'orifice central calibré. La position de ce boisseau au milieu du joint est contrôlée par une tige reliée à un bouton émergeant de la partie supérieure du corps 14. Le boisseau est agencé de manière à pouvoir coulisser longitudinalement à travers le joint 38. De manière également connue, le boisseau 36 est pourvu vers son extrémité inférieure, dans la zone venant en contact avec le perçage central du joint 38, d'une gorge 37. Cette dernière permet, suivant sa position verticale par rapport au perçage central du joint 38 de régler le débit d'eau passant du réservoir 30 vers la chambre de vaporisation 26.

Selon une version simplifiée de l'invention illustrée sur la figure 2, le réservoir principal d'eau 30 du fer à repasser 10 est chauffé dans sa totalité par des éléments de chauffage électriques auxiliaires 46 rapportés ou surmoulés contre ou dans la cuvette inférieure 33 de ce réservoir. Ces éléments de chauffage sont régulés par des moyens indépendants électromécaniques, tel qu'un bilame, ou des moyens électroniques basés sur un capteur de température, de telle sorte que le réservoir soit maintenu à une température supérieure à 60 °C, de préférence comprise entre 90°C et 100°C juste en dessous du point d'ébullition de l'eau.

Afin de limiter les risques dus à la chaleur, la partie supérieure 31 du réservoir 30 est isolée de l'extérieur par une double paroi, si désirée mise sous vide partiel. En complément, on peut également prévoir un matelas 13 de laine de verre entre le réservoir et la poignée 12.

L'eau du réservoir est ainsi maintenue à température supérieure à 90°C pendant toute sa période de stockage, usuellement supérieure à 10 minutes, ce qui permet déjà d'atteindre un taux important, de germination du tartre potentiellement précipitable. Cette eau en contact avec le boisseau est admise directement dans la chambre 26 où le tartre pulvérulent est entraîné avec la vapeur produite.

Dans une version plus élaborée d'un fer à repasser 11 illustré sur la figure 3, on intercale un réservoir auxiliaire 40 branché hydrauliquement en série entre le réservoir principal 30 et le boisseau 36. Pour des considérations d'encombrement, le réservoir principal est conservé dans la partie avant du corps 14, en relation avec son entrée 32 d'introduction de l'eau courante, et le réservoir auxiliaire 40 est placé à l'arrière du corps 14, dans le prolongement de la partie inférieure du réservoir 30.

Tels qu'illustrés sur cette figure 3, ces deux réservoirs sont en communication par le haut selon un agencement par chicane, permettant de préserver une séparation effective des deux volumes d'eau, l'un devant être chauffé, l'autre pas, et ce tout en assurant un remplissage périodique du réservoir auxiliaire. Cet agencement est décrit plus en détail dans le brevet FR 2 648 485 de la demanderesse.

Le réservoir auxiliaire 40 présente au moins un orifice d'introduction et d'évent 42 ménagé dans sa face supérieure située à l'intérieur du réservoir principal. Cet agencement comprend un plan incliné 34 partant du fond du réservoir principal 30 et arrivant légèrement au dessus du bord en correspondance de la face supérieure du réservoir auxiliaire. Ce bord supérieur définit avec la surface supérieure du réservoir auxiliaire, et la paroi supérieure du réservoir principal parallèle en vis-à-vis, un passage supérieur de communication.

L'évent 42 laisse s'échapper le dioxyde de carbone, favorisant ainsi le dégazage de l'eau du réservoir 40, afin de favoriser la germination et d'éviter une redissolution du tartre dans une éventuelle eau refroidie.

Pendant le repassage, sous l'effet du déplacement du fer, l'eau remonte sur le plan incliné, déborde au-dessus du bord supérieur pour être piégé dans le passage et finalement pénétrer dans le réservoir auxiliaire. De plus, à chaque mise en position verticale du fer en appui sur son talon, le réservoir auxiliaire 40 se remplit automatiquement d'eau.

Un canal 44 ménagé contre le fond du réservoir principal 30 et débouchant dans la partie inférieure du réservoir auxiliaire 40 amène l'eau de ce réservoir au boisseau 36 pour goutter dans la chambre de vaporisation 26. La section de ce canal est optimisée selon le débit maximum possible de vapeur.

On peut toutefois également envisager un branchement de ces deux réservoirs selon le principe des vases communicants de la figure 1, le canal d'alimentation alors plaqué contre la face inférieure de la cuvette de réservoir étant parallèle au canal de sortie 44, pour autant que le réservoir auxiliaire 40 soit aussi haut que le réservoir principal 30, et que ces deux réservoirs soient efficacement séparés thermiquement, par exemple par une double paroi.

De préférence, ce réservoir auxiliaire 40 est maintenu à une température exactement de 98°C ± 1°C, c'est-à-dire au mieux juste en dessous de l'ébullition pour éviter une tumultuosité incontrôlée. Des essais en atelier ont en effet montré que, à cette température, on pouvait précipiter rapidement l'essentiel du tartre précipitable.

Le réservoir auxiliaire 40 comprend un module de chauffage individuel à résistances électriques 46 et un dispositif électromécanique ou électronique de régulation. Les résistances chauffantes peuvent être surmoulées dans le caisson du réservoir, ou collées contre une paroi.

Selon une variante moins coûteuse illustrée sur la figure 3 en traits tirés, le chauffage de ce réservoir auxiliaire 40 est assuré par un pont métallique 48 dont l'extrémité inférieure est solidaire de la fonderie 28, et dont l'extrémité supérieure est fermement plaquée contre la paroi inférieure du réservoir par une fixation 49. Ce pont métallique transmet par conduction, à partir de la pièce de fonderie 28 régulée en température, une quantité de chaleur prédéterminée par les dimensions et la section de ce pont, cette quantité étant juste nécessaire et suffisante pour maintenir également le réservoir auxiliaire à la température désirée.

Par ailleurs, si la largeur maximale du réservoir auxiliaire est déterminée par celle du corps 14, on optimise sa profondeur et sa hauteur pour que volume global corresponde à la consommation maximale de vapeur pendant le temps de germination prévu.

En fonctionnement, l'eau du réservoir 30 franchit par les mouvements du fer la rampe 34 et s'écoule dans le réservoir auxiliaire 40 par l'orifice 42. Elle s'échauffe dans ce réservoir auxiliaire à environ 98°C avant de s'écouler par le canal 4 vers le boisseau 36 qui commande la vaporisation. Quand le boisseau laisse s'écouler l'eau, elle chute sur la face intérieure de la chambre de vaporisation 26 du fer où elle s'évapore. Le tartre, préalablement précipité au passage dans le réservoir auxiliaire 40 et entraîné par l'eau, se dépose de façon pulvérulente sur la paroi chaude, et est entraîné par la vapeur produite, évitant ainsi le colmatage du fer.

Dans le cas d'un fer à repasser à réservoir intégré, on constate que l'agitation de l'eau chauffée due aux mouvements de repassage favorise la germination. Ceci s'explique par le dégazage qui facilite la formation du carbonate de calcium. L'influence de ce dégazage est accentué par la présence d'un dépôt qui, avec l'agitation, est mieux réparti dans la solution. L'orifice 42 sert par ailleurs de passage d'évacuation pour les gaz produits, favorisant ainsi le dégazage du dioxyde de carbone.

Bien entendu, l'invention n'est pas strictement limitée aux modes de réalisation que l'on vient de décrire, et on peut apporter à ceux-ci de nombreux changements et modifications sans sortir du cadre des revendications. On peut notamment prévoir un fer dont le réservoir est amovible. De plus, l'invention n'est pas limitée aux fers à repasser, et est applicable à tout autre type d'appareil électroménager mettant en oeuvre de la vapeur, tel que des machines à expresso.

On peut, par exemple, retenir comme "réservoir" toute autre zone réduite du circuit d'eau dans laquelle cette eau est retenue pendant un délai minimum correspondant au temps prévu de germination, par exemple inférieur à 3 minutes. Cette zone réduite est alors munie d'un moyen de chauffage adéquat, et, si désirée, d'une protection thermique.

On peut également accélérer la germination du tartre en prévoyant la présence d'un catalyseur dans la chambre de chauffage. Ce catalyseur peut être une roche naturelle ou artificielle, en fragments ou en billes. Comme illustré sur la figure 2, on peut ainsi disposer des fragments ou nodules de roche à l'intérieur d'une cage 35, éventuellement amovible pour remplacement si surchargée.

On peut également envisager de tapisser les parois internes du réservoir de chauffage par une matière prévenant une incrustation de tartre involontairement cristallisée sous une forme à angles vifs, par exemple un dépôt métallique d'acier inoxydable.

## Revendications

1. Appareil électroménager (1;10;11) comportant un réservoir (3;30) d'eau interne ou externe relié à des moyens de génération de vapeur sensiblement instantanée (26) ainsi qu'un dispositif anti-tartre en amont desdits moyens de génération de vapeur, caractérisé en ce que le dispositif anti-tartre comprend des moyens de thermoprécipitation du tartre dans l'eau sous forme non incrustante pour son évacuation hors de l'appareil par entraînement de la vapeur.

2. Appareil selon la revendication 1, caractérisé en ce que les moyens de thermoprécipitation comprennent une zone de chauffage de l'eau.

3. Appareil selon l'une des revendications 1 ou 2, caractérisé en ce que l'eau contenue dans la zone de chauffage est maintenue à une température au moins supérieure à 60°C, et de préférence à une température comprise entre 90°C et 100°C.

4. Appareil selon l'une des revendications 1 à 3, caractérisé en ce que la zone de chauffage de l'eau comprend un réservoir (4;30;40) de chauffage de l'eau.

5. Appareil (1;10) selon la revendication 4, caractérisé en ce que le réservoir de chauffage du dispositif anti-tartre est le réservoir (30) normalement prévu pour le stockage de l'eau, et dont la cuvette (33) est complétée de moyens de chauffage (46) et de régulation.

6. Appareil (1;11) selon la revendication 4, caractérisé en ce que le réservoir du dispositif anti-tartre est un réservoir auxiliaire (4;40) muni de moyens de chauffage (6;46;48) et de régulation, si désiré, structuré de manière à assurer une protection thermique et/ou garnie de matériau réfractaire.

7. Appareil (1;11) selon la revendication 6, caractérisé en ce que le volume du réservoir auxiliaire (4;40) est établi en fonction du débit maximum possible de vapeur de telle sorte que l'eau y soit maintenue à une température élevée pendant un temps correspondant sensiblement au temps de germination prévu, par exemple trois minutes.

8. Fer à repasser (1) selon l'une des revendications 6 ou 7, incorporant une chambre de vaporisation et relié par un câble d'alimentation électrique et un tube d'alimentation d'eau (2) à une station fixe comportant un réservoir principal d'eau (3) et une pompe de refoulement (5) de l'eau dans le tube d'alimentation, caractérisé en ce que le réservoir auxiliaire (4) du dispositif anti-tartre est installé dans la station fixe entre le réservoir principal (3) et la pompe (5), le transfert de l'eau du réservoir principal dans le réservoir auxiliaire s'effectuant par un conduit inférieur (8) selon le principe des vases communicants.

9. Fer à repasser (11) selon l'une des revendications 6 ou 7 comprenant un réservoir principal d'eau (30) s'étendant sensiblement horizontalement au-dessus de la chambre de vaporisation (26), caractérisé en ce que le réservoir auxiliaire (40) est à proximité du réservoir d'eau (30) avec lequel il est en communication par un passage, un canal (44) débouchant dans la partie inférieure du réservoir auxiliaire amenant l'eau vers la chambre de vaporisation (26).

10. Fer à repasser selon la revendication 9, caractérisé en ce que le réservoir auxiliaire (40) est en communication avec le réservoir principal (30) par un orifice (42) ménagé dans sa face supérieure, et en ce que le réservoir principal (30) comporte un plan incliné (34) adjacent au réservoir auxiliaire, ce plan partant du fond et s'arrêtant légèrement au-dessus de la face supérieure du réservoir auxiliaire ; le bord supérieur de ce plan, la face supérieure du réservoir auxiliaire et la paroi supérieure du réservoir principal définissant un passage de l'eau du réservoir principal dans le réservoir auxiliaire.

11. Fer à repasser selon la revendication 10, caractérisé en ce que le moyen de chauffage du réservoir auxiliaire (40) est un pont thermique (48) ménagé entre la fonderie (28) de la chambre d'évaporation (26) et la paroi du réservoir auxiliaire (40), les dimensions de ce pont assurant un transfert prédéterminé de calories pour maintenir le réservoir auxiliaire à la température désirée.

12. Fer à repasser selon l'une des revendications 6 à 11, caractérisé en ce qu'il comprend des moyens (4a ; 42) d'évacuation des gaz provenant de la thermoprécipitation.

13. Fer à repasser selon la revendication 12, caractérisé en ce que les moyens d'évacuation (4a ; 42) commutent en au moins une ouverture prévue dans une paroi du réservoir (4 ; 40).

14. Appareil selon l'une des revendications précédentes, caractérisé en ce que des fragments de roches naturelles ou artificielles, ou d'autres moyens permettant d'activer la germination du tartre sont installés dans la zone de chauffage.

15. Méthode de précipitation du tartre pour appareil électroménager, comportant des moyens de génération de vapeur sensiblement instantanée, où une quantité d'eau prédéterminée est préchauffée avant sa vaporisation caractérisée en ce que la quantité d'eau est préchauffée au sein d'un réservoir de telle sorte que le tartre précipite sous forme non incrustante au sein de l'eau pour son évacuation hors de l'appareil par entraînement de la vapeur.

## Claims

1. A household electric appliance (1; 10; 11) including an internal or external water tank (3; 30) connected to steam-generating means (26) for generating steam substantially instantaneously, and an anti-fur device, said appliance being characterized in that the anti-fur device comprises thermo-precipitation means for thermo-precipitating fur in the water in a non-encrusting form, upstream from said steam-generating means, so that said fur is removed from the appliance by being entrained in the steam.

2. An appliance according to claim 1, characterized in that the thermo-precipitation means comprise a water-heating zone.

3. An appliance according to claim 1 or 2, characterized in that the water contained in the water-heating zone is maintained at a temperature of at least greater than 60°C, and preferably at a temperature lying in the range 90°C to 100°C.

4. An appliance according to any one of claims 1 to 3, characterized in that the water-heating zone comprises a water-heating tank (4; 30; 40).

5. An appliance (1; 10) according to claim 4, characterized in that the water-heating tank of the anti-fur device is the tank (30) that is normally provided for storing water, and whose bottom (33) is supplemented by heater means (46) and by regulation means.

6. An appliance (1; 11) according to claim 4, characterized in that the tank of the anti-fur device is an auxiliary tank (4; 40) provided with heater means (6; 46; 48) and with regulation means, and optionally structured to provide thermal protection and/or coated with refractory material.

7. An appliance (1; 11) according to claim 6, characterized in that the volume of the auxiliary tank (4; 40) is established as a function of the maximum possible steam flow rate so that the water in it is maintained at a high temperature for a time corresponding substantially to the planned nucleation time, e.g. three minutes.

8. A smoothing iron (1) according to claim 6 or 7, said iron incorporating a steam-generating chamber and being connected via an electrical power cable and via a water feed tube (2) to a fixed station comprising a main water tank (3) and a pump (5) for delivering water into the feed tube, said iron being characterized in that the auxiliary tank (4) of the anti-fur device is installed in the fixed station between the main tank (3) and the pump (5), the water being transferred from the main tank to the auxiliary tank via a bottom duct (8) on the principle of communicating vessels.

9. A smoothing iron (11) according to claim 6 or 7, including a main water tank (30) extending substantially horizontally above the steam-generating chamber (26), said iron being characterized in that the auxiliary tank (40) is in the vicinity of the water tank (30) with which it communicates via a passageway, a channel (44) that opens out in the bottom portion of the auxiliary tank conveying water to the steam-generating chamber (26).

10. A smoothing iron according to claim 9, characterized in that the auxiliary tank (40) communicates with the main tank (30) via an orifice (42) provided in its top face, and in that the main tank (30) is provided with a sloping surface (34) adjacent to the auxiliary tank, which surface extends from the bottom and terminates slightly above the top face of the auxiliary tank; the top edge of the surface, the top face of the auxiliary tank, and the top wall of the main tank defining a passageway via which water can pass from the main tank into the auxiliary tank.

11. A smoothing iron according to claim 10, characterized in that the heater means for heating the auxiliary tank (40) are constituted by a heat bridge (48) provided between the casting (28) of the steam-generating chamber (26) and the wall of the auxiliary tank (40), the dimensions of the bridge guaranteeing a predetermined amount of heat transfer so as to maintain the auxiliary tank at the desired temperature.

12. A smoothing iron according to any one of claims 6 to 11, characterized in that it is provided with gas-removing means (4a; 42) for removing gases coming from the thermo-precipitation.

13. A smoothing iron according to claim 12, characterized in that the gas-removing means (4a; 42) consist of at least one opening provided in a wall of the tank (4; 40).

14. An appliance according to any preceding claim, characterized in that fragments of natural or artificial rocks, or other means making it possible to activate the nucleation of the fur are installed in the water-heating zone.

15. A method of precipitating fur for a household electric appliance including steam-generating means for generating steam substantially instantaneously, in which method a predetermined quantity of water is pre-heated before it is transformed into steam, said method being characterized in that the quantity of water is pre-heated in a tank so that the fur precipitates in a non-encrusting form in the water so that said fur is removed from the appliance by being entrained in the steam.

## Patentansprüche

1. Elektro-Haushaltsgerät (1; 10; 11) mit einem internen oder externen Wassertank (3; 30), der mit Mitteln (26) zum im wesentlichen sofortigen Erzeugen von Dampf verbunden ist, und mit einer Vorrichtung zum Schutz gegen Kalkablagerungen, die den Mitteln zum Erzeugen von Dampf vorgelagert ist, dadurch gekennzeichnet, daß die Vorrichtung zum Schutz gegen Kalkablagerungen Mittel zur Thermopräzipitation des Kalks im Wasser unter Verhinderung von Krustenbildung enthält, um diesen durch Mitreißen mit dem Dampf aus dem Gerät auszuspülen.

2. Gerät nach Anspruch 1, dadurch gekennzeichnet, daß die Mittel zur Thermopräzipitation einen Bereich zum Erhitzen des Wassers enthalten.

3. Gerät nach Anspruch 1 oder 2, dadurch gekennzeichnet, daß das im Heizbereich enthaltene Wasser auf einer Temperatur von mindestens über 60°C gehalten wird, vorzugsweise auf einer Temperatur zwischen 90°C und 100°C.

4. Gerät nach einem der Ansprüche 1 bis 3, dadurch gekennzeichnet, daß der Bereich zum Erhitzen des Wassers einen Tank (4; 30; 40) zum Erhitzen des Wassers enthält.

5. Gerät (1; 10) nach Anspruch 4, dadurch gekennzeichnet, daß der Heiztank der Vorrichtung zum Schutz gegen Kalkablagerungen der normalerweise zum Speichern von Wasser vorgesehene Tank (30) ist und dessen Wanne (33) mit Mitteln (46) zum Erhitzen und Regulieren ergänzt ist.

6. Gerät (1; 11) nach Anspruch 4, dadurch gekennzeichnet, daß der Tank der Vorrichtung zum Schutz gegen Kalkablagerungen ein Hilfstank (4; 40) ist, der mit Mitteln (6; 46; 48) zum Erhitzen und Regulieren versehen ist und nach Wunsch so aufgebaut ist, daß er einen Wärmeschutz gewährleistet und/oder mit hitzebeständigem Material ausgestattet ist.

7. Gerät (1; 11) nach Anspruch 6, dadurch gekennzeichnet, daß das Volumen des Hilfstanks (4; 40) in Abhängigkeit von der maximal möglichen Dampfdurchsatzmenge so gebildet ist, daß das Wasser darin auf einer hohen Temperatur während einer Zeitdauer gehalten wird, die im wesentlichen der vorgesehenen Keimungszeit entspricht, beispielsweise drei Minuten.

8. Bügeleisen (1) nach Anspruch 6 oder 7, das eine Verdampfungskammer umfaßt und durch eine Stromversorgungsleitung und ein Wassereinspeiserohr (2) mit einer festen Station verbunden ist, die einen Hauptwassertank (3) und eine Pumpe (5) zum Fördern des Wassers in das Speiserohr enthält, dadurch gekennzeichnet, daß der Hilfstank (4) der Vorrichtung zum Schutz gegen Kalkablagerungen in der festen Station zwischen dem Haupttank (3) und der Pumpe (5) eingebaut ist, wobei der Wasserübergang vom Haupttank in den Hilfstank über eine untere Leitung (8) nach dem Prinzip kommunizierender Röhren erfolgt.

9. Bügeleisen (11) nach Anspruch 6 oder 7, mit einem Hauptwassertank (30), der sich im wesentlichen horizontal über der Verdampfungskammer (26) erstreckt, dadurch gekennzeichnet, daß der Hilfstank (40) sich nahe dem Wassertank (30) befindet, mit dem er durch einen Durchgang in Verbindung steht, wobei ein Kanal (44) in den unteren Teil des Hilfstanks mündet, der das Wasser zur Verdampfungskammer (26) leitet.

10. Bügeleisen nach Anspruch 9, dadurch gekennzeichnet, daß der Hilfstank (40) mit dem Haupttank (30) durch eine Öffnung (42) in Verbindung steht, die an seiner Oberseite vorgesehen ist, und daß der Haupttank (30) eine geneigte Ebene (34) enthält, die an den Hilfstank angrenzt, wobei diese Ebene vom Boden ausgeht und knapp über der Oberseite des Hilfstanks endet und wobei die obere Kante dieser Ebene, die Oberseite des Hilfstanks und die obere Wand des Haupttanks einen Durchgang für das Wasser vom Haupttank in den Hilfstanks definieren.

11. Bügeleisen nach Anspruch 10, dadurch gekennzeichnet, daß das Heizmittel des Hilfstanks (40) eine Wärmebrücke (48) ist, die zwischen dem Gußteil (28) der Verdampfungskammer (26) und der Wand des Hilfstanks (40) angeordnet ist, wobei die Abmessungen dieser Brücke einen vorbestimmten Wärmetransfer gewährleisten, um den Hilfstank auf der gewünschten Temperatur zu halten.

12. Bügeleisen nach einem der Ansprüche 6 bis 11, dadurch gekennzeichnet, daß es Mittel (4a; 42) zum Ableiten der aus der Thermopräzipitation stammenden Gase enthält.

13. Bügeleisen nach Anspruch 12, dadurch gekennzeichnet, daß die Ableitmittel (4a; 42) in zumindest eine Öffnung übergehen, die in einer Wand des Tanks (4; 40) vorgesehen ist.

14. Gerät nach einem der vorhergehenden Ansprüche, dadurch gekennzeichnet, daß Bruchstücke natürlicher oder künstlicher Steine oder andere Mittel, die es ermöglichen, die Kalkkeimung zu aktivieren, im Heizbereich angeordnet sind.

15. Verfahren zur Präzipitation von Kalk für Elektro-Haushaltsgeräte, mit Mitteln zum im wesentlichen sofortigen Erzeugen von Dampf, bei dem eine vorbestimmte Wassermenge vor deren Verdampfen vorgewärmt wird, dadurch gekennzeichnet, daß die Wassermenge im Inneren eines Tanks so vorgewärmt wird, daß der Kalk in nicht verkrustender Weise im Wasser präzipitiert, um ihn durch Mitreißen mit dem Dampf aus dem Gerät auszuspülen.
